# EUROPEAN PATENT APPLICATION

(11) **EP 4 793 605 A1**
(43) Date of publication of application: **19.08.2026**
(21) Application number: 26157345.5
(22) Date of filing: 09.02.2026
(51) Int. Cl.: G01J 3/18, G01J 3/32, G01J 3/02, G01J 3/12, G01J 3/28

(54) **SYSTEMS AND METHODS FOR PERFORMING COMPRESSIVE SPECTRAL MEASUREMENTS USING A PROGRAMMABLE WAVELENGTH FILTER**

(30) Priority: 18.02.2025 US 202563759801 P
(71) Applicant: Thermo Electron Scientific Instruments LLC, Madison, WI 53711 (US)
(72) Inventor: WILLE, Logan, Madison (US); IRWIN, Julian, Madison (US); WILEY, Ted, Monticello (US)
(74) Representative: Boult Wade Tennant LLP

(57) **Abstract**

An illustrative a spectroscopic system includes a source for generating an electromagnetic radiation, a detector for detecting a light emitted from a sample, and a programmable wavelength filter including multiple pixels for selectively directing the light emitted from the sample to the detector. The programmable wavelength filter is set to a first setting and the sample is irradiated with the electromagnetic radiation such that the programmable wavelength filter directs a first portion of the light emitted from the sample to the detector. At least one pixel region of the programmable wavelength filter includes a first non-zero number of pixels directing the light from the sample to the detector and a second non-zero number of pixels not directing the light from the sample to the detector such that the detector detects the first portion of the light.

## Description

### FIELD OF THE INVENTION

The present description relates generally to methods and systems for spectroscopic analysis, and more particularly, to methods and systems for performing compressive spectral measurements using programmable optical filters having selectively controllable pixels.

### BACKGROUND INFORMATION

Spectrometry is a technique for analyzing a sample by illuminating the sample and detecting light emitted or scattered from the sample, where properties of the detected light are used to determine one or more characteristics of the sample, such as composition or structure

### SUMMARY

In some examples, a spectroscopic system includes a source for generating electromagnetic radiation, a detector for detecting light emitted from a sample, and a programmable wavelength filter with multiple pixels for selectively directing the light to the detector. The pixels of the programmable wavelength filter form several pixel regions, each configured to direct light of the same wavelength. The system also includes a memory for storing instructions and one or more processors that execute these instructions. The programmable wavelength filter may be set to a first setting. Responsive to the sample being irradiated with the electromagnetic radiation from the source, a first portion of the light emitted from the sample is directed to the detector. In the first setting, at least one pixel region of the programmable wavelength filter includes a first non-zero number of pixels directing the light from the sample to the detector and a second non-zero number of pixels not directing the light from the sample to the detector. The detector then detects the first portion of the light.

In some illustrative examples, a system comprises a memory storing instructions and a processor communicatively coupled to the memory and configured to execute the instructions to perform a process comprising: obtaining a plurality of spectral measurements of one or more analytes of interest, the plurality of spectral measurements corresponding to a plurality of wavelengths; training, based on the plurality of spectral measurements, a linear model to determine one or more attributes of the one or more analytes of interest; and setting, based on the training the linear model, pixels of a programmable wavelength filter comprising a plurality of pixel regions each associated with a particular wavelength in the plurality of wavelengths and each having a total of N pixels, wherein the setting the pixels comprises causing M pixels included in the N pixels of one or more pixel regions to be enabled and P pixels included in the N pixels of the one or more pixel regions to be disabled, wherein M and P are both greater than zero.

In some examples, a system comprises a programmable wavelength filter comprising a plurality of pixel regions each having a total of N pixels, wherein enabled pixels of the programmable wavelength filter are configured to direct light to a detector and disabled pixels of the programmable wavelength filter are configured to not direct light to the detector; and a processing unit communicatively coupled with the programmable wavelength filter and configured to perform a process comprising: obtaining a plurality of spectral measurements of one or more analytes of interest, the plurality of spectral measurements corresponding to a plurality of wavelengths; training, based on the plurality of spectral measurements, a linear model to determine one or more attributes of the one or more analytes of interest; and setting, based on the training the linear model, pixels of the programmable wavelength filter, wherein the setting the pixels comprises causing M pixels included in the N pixels of one or more pixel regions to be enabled and P pixels included in the N pixels of the one or more pixel regions to be disabled, wherein M and P are both greater than zero.

In some examples, a method comprises obtaining a plurality of spectral measurements of one or more analytes of interest, the plurality of spectral measurements corresponding to a plurality of wavelengths; training, based on the plurality of spectral measurements, a linear model to determine one or more attributes of the one or more analytes of interest; and setting, based on the training the linear model, pixels of a programmable wavelength filter comprising a plurality of pixel regions each associated with a particular wavelength in the plurality of wavelengths and each having a total of N pixels, wherein the setting the pixels comprises causing M pixels included in the N pixels of one or more pixel regions to be enabled and P pixels included in the N pixels of the one or more pixel regions to be disabled, wherein M and P are both greater than zero.

In some illustrative embodiments, a spectrometer system comprises a programmable wavelength filter configured to direct light to a detector, the programmable wavelength filter comprising a plurality of pixel regions each having a total of N pixels, wherein a portion of the N pixels in at least one pixel region are enabled when light is directed to the detector by the programmable wavelength filter.

### BRIEF DESCRIPTION OF THE DRAWINGS

The accompanying drawings illustrate various embodiments and are a part of the specification. The illustrated embodiments are merely examples and do not limit the scope of the disclosure. Throughout the drawings, identical or similar reference numbers designate identical or similar elements.
FIG. 1 shows a schematic of an illustrative spectrometry system including a programmable wavelength filter.
FIG. 2 shows a perspective view of an illustrative implementation of the programmable wavelength filter of FIG. 1.
FIG. 3A shows a front view of the programmable wavelength filter of FIG. 2.
FIG. 3B shows a side view of the programmable wavelength filter of FIG. 2.
FIG. 4 shows a schematic of an illustrative compressive spectral measurement system.
FIG. 5 shows a flowchart of an illustrative method for performing compressive spectral measurements.
FIG. 6 shows an illustrative spectrum that plots intensity of light as a function of wavelength.
FIG. 7 shows an illustrative graph that plots coefficients of an algorithm as a function of wavelength.
FIG. 8A shows a perspective view of the programmable wavelength filter of FIG. 2 having a first plurality of pixels enabled and a second plurality of pixels disabled.
FIG. 8B shows a front view of the programmable wavelength filter of FIG. 8A with the first plurality of pixels shaded for illustrative purposes.
FIG. 9 shows an illustrative method of providing settings for a programmable wavelength filter.
FIG. 10 shows an illustrative method of performing measurements using a programmable wavelength filter.
FIG. 11 shows an illustrative method for spectroscopic analysis using a programmable wavelength filter.

### DETAILED DESCRIPTION

The chemical analysis based on spectroscopic data typically includes collecting spectral data over a range of wavelengths. For example, conventional optical array (e.g. charge-coupled device or "CCD") based spectrometers are used to collect a spectrum. Collecting the spectral data over the entire spectrum can be very time-consuming. One way to increase the data acquisition speed is using compressive measurement techniques, as described in US patent US9476824B2, which is incorporated herein by reference and for all purposes. In US947682B2, programmable optical filters are used to form binary mathematical filters, wherein all photons with the same energy level are either transmitted or blocked. Applicant recognizes that configuring such digital filters requires prior knowledge of the accurate spectrum for the analytes of interest. Further, this results in a model that does not focus on a region of the spectrum that is indicative of the analytes of interest in the sample. Applicant recognizes that by transmitting or blocking all photons within the same energy level, the programmable wavelength filter needs to be switched multiple times for analyzing one sample. Further, the photon integration period during each measurement after switching the programmable wavelength filter needs to be accurately controlled, which adds the complexity and may introduce error to the measurement.

In order to solve the issues above, methods and systems are described herein for performing compressive spectral measurements using a programmable wavelength filter. In particular, a programmable wavelength filter including multiple pixels is configured to selectively direct the light emitted from the sample to the detector, wherein the multiple pixels formed a plurality of pixel regions, and each pixel region is configured to direct the light of the same wavelength. The programmable wavelength filter is set to a first setting, and the sample is irradiated with the electromagnetic radiation generate from a source. A first portion of the light emitted from the sample is directed to the detector via the programmable wavelength filter. At least one pixel region of the programmable wavelength filter includes a first non-zero number of pixels directing the light from the sample to the detector and a second non-zero number of pixels not directing the light from the sample to the detector. The first portion of the light is collected by the detector and used for analyzing attributes of the sample. By setting a fraction of the pixels in the same pixel region to direct the sample light to the detector, a linear model, generated via a chemometric techniques such as total least squares (TLS), partial least squares (PLS), principle component analysis (PCA), can be implemented. The sample attributes can be determined based on a fewer number of measurements the sample comparing to the previous disclosed compressive measurement techniques.

The detector may be a single channel detector that detects the total intensity of the first portion of light.

The light emitted from sample responsive to the irradiation may include light scattered and/or generated from the sample responsive to the irradiation. The light emitted from the sample may include Raman characteristics (i.e. Raman signals).

Determining the sample attributes includes determining one or more of chemical composition, chemical structure, chemical bonds, and concentrations of the sample.

In some examples, the programmable wavelength filter may include pixels arranged in a two-dimensional array. The array is composed of multiple pixel columns arranged along the x-direction, with each column containing several pixels arranged along the y-direction. The number of pixels in each column may be different. The pixel array may be divided into multiple pixel regions. In one example, each pixel region may include one or more entire columns. In another example, each pixel region may include multiple pixels from different columns.

The pixel region may be determined by the spectral distribution of the light emitted from the sample and received by the programmable wavelength filter. Each pixel region corresponds to the same wavelength of the received light. The first number and the second number of pixels may be determined based on the spatial distribution of the light. For example, for a particular wavelength (or pixel region), the first number and the second number are determined based on the intensity distribution of the light over the pixel region. Herein, the same wavelength refers to wavelengths within a small spectral range. For example, the small spectral range may be less than 0.5 nm.

Setting the filters includes setting the direction of the pixels of the programmable wavelength filter to either direct the received light to the detector or not direct the received light to the detector. By setting the filter to different settings, not only specific ranges of wavelengths may be selected and directed to the detector, the proportion of light intensity at each wavelength of the directed light can also be tuned.

In some examples, the distribution of the light on the programmable wavelength filter may be adjusted, for example, by adjusting the astigmatism of the light emitted from the sample.

By setting a fraction of the pixels in the same pixel region to direct the sample light to the detector, at a particular wavelength corresponding to the at least one pixel region of the programmable wavelength filter, a non-zero fraction of the light emitted from the sample received by the programmable wavelength filter is directed to the detector. The fraction may be determined based on the coefficients of the linear model.

The first number and the second number may be determined based on a linear model generated by fitting a plurality of spectral measurements from one or more analytes of interest to one or more attributes of the one or more analytes. The spectral measurements include plurality spectra of the analytes of interest.

In some examples, after detecting the first portion of the light, programmable wavelength filter is set to a second setting. The system irradiates the sample with electromagnetic radiation and directs a second portion of the light emitted from the sample to the detector via the programmable wavelength filter. The detector then detects this second portion of the light.

The first setting and the second setting may be determined based on different signs of coefficients of the linear model.

In some examples, a third portion of light emitted from the sample may be measured by setting the programmable wavelength filter to a third setting, wherein all light received by the filter is directed to the detector. The detected third portion of the light may be used for normalizing the detected first and second portion of light.

In some examples, the sample composition may be determined based only on the detected first, second, and third portion of light. As such, sample composition can be determined by setting the filter to three settings.

In one example, pixels of a programmable wavelength filter comprising a plurality of pixel columns each associated with a particular wavelength in the plurality of wavelengths and each having a total of N pixels, wherein the setting the pixels to the first setting comprises causing M pixels included in the N pixels of one or more pixel columns to direct the light emitted from the sample to the detector, and P pixels included in the N pixels of the one or more pixel columns to not direct the light to the detector, wherein M and P are both greater than zero.

Methods and systems are described herein for performing compressive spectral measurements using a programmable wavelength filter. For example, a programmable wavelength filter includes a plurality of pixel regions each associated with a particular wavelength in a spectrum and each having a plurality of pixels. Using a linear model, one or more pixel regions of the programmable wavelength filter are set to enable a portion of the pixels in each of the one or more pixel regions to direct light towards a detector and set to disable another portion of the pixels in each of the one or more pixel regions to not direct light towards the detector. Accordingly, a percentage of intensity of light at the particular wavelengths associated with the one or more pixel regions is directed to the detector to be measured. Based on the measured intensity of light, one or more attributes of an analyte of interest can be determined.

To illustrate, a method of performing compressive spectral measurements using a programmable wavelength filter includes obtaining a plurality of spectral measurements of one or more analytes of interest, the plurality of spectral measurements corresponding to a plurality of wavelengths; training, based on the plurality of spectral measurements, a linear model to determine one or more attributes of the one or more analytes of interest; and setting, based on the training the linear model, pixels of a programmable wavelength filter comprising a plurality of pixel columns each associated with a particular wavelength in the plurality of wavelengths and each having a total of N pixels, wherein the setting the pixels comprises causing M pixels included in the N pixels of one or more pixel columns to be enabled and P pixels included in the N pixels of the one or more pixel columns to be disabled, wherein M and P are both greater than zero.

Systems and methods described herein may provide various benefits, which may include one or more advantages over conventional systems and methods for performing compressive spectral measurements (e.g., using a binary filter). For example, performing compressive spectral measurements using a programmable wavelength filter allows a linear model to be used to set the programmable wavelength, which may perform the compressive spectral measurements more efficiently (e.g., by having a faster acquisition time and/or by reducing an amount of computing resources needed to perform the compressive spectral measurements). These more efficient compressive spectral measurements may further reduce costs (e.g., by allowing the use of a less expensive detector, such as a single channel detector, to measure light directed by the programmable wavelength filter). Moreover, the linear model used to set the programmable wavelength filter provides more accurate compressive spectral measurements (e.g., by adapting the linear model to the programmable wavelength filter based on multiple spectral measurements, such as a region of the multiple spectral measurements having a good relationship relative to attributes of the analyte of interest).

Various embodiments will now be described in more detail with reference to the figures. The systems and methods described herein may provide one or more of the benefits mentioned above and/or various additional and/or alternative benefits that will be made apparent herein.

In some implementations, the methods and systems for performing compressive spectral measurements, as described herein, may be used in conjunction with a Raman spectrometry system. As such, a Raman spectrometry system will now be described. However, the described Raman spectrometry system is illustrative and not limiting. The methods and systems described herein may operate as part of or in conjunction with the Raman spectrometry system described herein and/or with any other suitable optical spectrometry system, including an infrared spectrometry system, an ultra-violet spectrometry system, or an optical emission spectrometer.

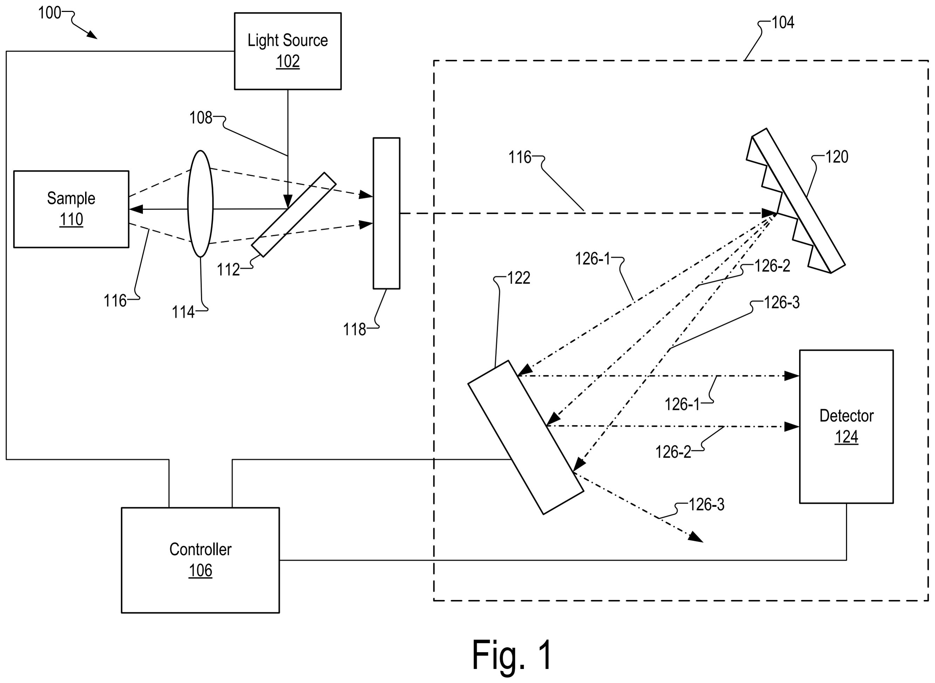

FIG. 1 shows an illustrative Raman spectrometry system 100 ("spectrometry system 100"). Spectrometry system 100 includes a light source 102, a spectrometer 104, and a controller 106. Light source 102 is configured to generate light 108 for illuminating a sample 110. In some examples, light 108 generated by light source 102 includes a monochromatic light (e.g., light having a substantially constant wavelength and/or frequency), such as light in the visible range (e.g., light having wavelengths from about 380 nanometers (nm) to about 700 nm), near infrared range (e.g., light having wavelengths from about 700 nm to about 2500 nm), and/or near ultraviolet range (e.g., light having wavelengths from about 200 nm to about 400 nm. Light source 102 is implemented by any suitable light source configured to generate light 108, such as a laser (e.g., a continuous wave laser, a pulsed laser, etc.) including, but not limited to, a 780 nm diode laser, a 633 nm HeNe laser, and/or a 532 nm solid state laser.

In some examples, light 108 generated by light source 102 is manipulated by one or more optical devices to direct light 108 toward sample 110. As shown, light 108 generated by light source 102 is directed toward a beam splitter 112 configured to split light 108 into a transmitted beam portion and a reflected beam portion. The transmitted beam portion is directed toward a focusing lens 114 configured to focus the transmitted beam portion toward sample 110. Still other suitable optical devices may be used to manipulate light 108 toward sample 110, such as one or more of a filter (e.g., a laser filter, a notch filter, a tunable filter, an edge filter, a neutral density filter, etc.), a lens (e.g., a focusing lens, a collimating lens, a collection lens, etc.), or a mirror.

Sample 110 includes one or more analytes, for example, chemical analytes (e.g., molecules, ions, etc.) and/or biological analytes (e.g., metabolites, proteins, lipids, etc.), for detection and analysis by spectrometry system 100. To illustrate, when sample 110 is illuminated by light 108, molecular bonds in the one or more analytes of sample 110 are excited by light 108 and in response emit scattered light 116 (e.g., by Raman scattering) having a plurality of wavelengths that are shifted to a different wavelength than illuminating light 108. Based on the shift in wavelengths and/or frequencies of scattered light 116 emitted from sample 110 relative to illuminating light 108 received by sample 110, spectrometry system 100 may determine one or more attributes (e.g., identification, structure, chemical bonds, concentrations, etc.) of the one or more analytes included in sample 110.

Accordingly, scattered light 116 is directed toward spectrometer 104 for detection and analysis of scattered light 116. In some examples, scattered light 116 emitted from sample 110 is directed to spectrometer 104 by one or more optical devices that may include the same optical devices used to direct light 108 towards sample 110 and/or additional optical devices. As shown, focusing lens 114 is configured to focus scattered light 116 toward a filter 118 configured to allow scattered light 116 having a desired wavelength range, such as wavelengths outside of the wavelength included in light 108, to pass through filter 118 to spectrometer 104. Still other suitable optical devices may be used to direct at least a portion of scattered light 116 toward spectrometer 104, such as one or more of a beam splitter, a filter (e.g., a laser filter, a notch filter, a tunable filter, an edge filter, a neutral density filter, etc.), a lens (e.g., a focusing lens, a collimating lens, a collection lens, etc.), a mirror.

As shown, spectrometer 104 includes grating 120, a programmable wavelength filter 122, and a detector 124. Grating 120 is implemented by any suitable grating (e.g., holographic gratings, transmission gratings, reflection gratings, etc.) or other dispersive element configured to disperse scattered light 116 into a plurality of component wavelengths 126 (e.g., wavelengths 126-1 through 126-3) included in scattered light 116. Each wavelength 126 may include a particular wavelength and/or a continuous range of wavelengths included in scattered light 116. As an illustrative example, scattered light 116 may include wavelengths from about 200 nm to about 400 nm such that grating 120 is configured to separate scattered light 116 into ranges of wavelengths 126 of about 10 nm (e.g., a first wavelength 126-1 may include wavelengths ranging from about 200 nm to about 210 nm, a second wavelength 126-2 may include wavelengths ranging from about 210 nm to about 220 nm, a third wavelength 126-3 may include wavelengths ranging from about 220 nm to about 230 nm, etc.). While the illustrated example shows grating 120 separating scattered light 116 into three wavelengths 126, grating 120 may separate scattered light 116 into any suitable number and/or range of wavelengths 126. Moreover, in instances where grating 120 separates scattered light 116 into wavelengths 126 having continuous ranges, a size of the range of wavelengths included in each wavelength 126 may be the same and/or vary across wavelengths 126.

Grating 120 is further configured to direct the plurality of separated wavelengths 126 toward programmable wavelength filter 122. For example, the plurality of wavelengths 126 of scattered light 116 separated by grating 120 are directed from grating 120 in different directions (e.g., at difference angles) such that each wavelength 126 included in the plurality of wavelengths 126 is received at a different region of programmable wavelength filter 122 relative to other wavelengths 126.

Programmable wavelength filter 122 is configured to receive the plurality of wavelengths 126 and selectively direct one or more wavelengths of interest (e.g., one or more wavelengths useful in determining one or more attributes of the one or more analytes in sample 110) included in the plurality of wavelengths 126 toward detector 124, while filtering the remaining wavelengths included in the plurality of wavelengths 126 (e.g., the filtered wavelengths are not directed toward detector 124). As an illustrative example, a first wavelength 126-1 and a second wavelength 126-2 included in the plurality of wavelengths 126 of scattered light 116 may be selected for detection, while a third wavelength 126-3 included in the plurality of wavelengths 126 may not be selected for detection. Accordingly, programmable wavelength filter 122 is configured to selectively direct the first wavelength 126-1 and the second wavelength 126-2 toward detector 124 and to filter (e.g., not direct) the third wavelength 126-3 toward detector 124 (e.g., by blocking third wavelength 126-3 and/or directing third wavelength 126-3 away from detector 124).

In some examples, programmable wavelength filter 122 is configured to attenuate or filter a portion of the selected wavelengths 126 directed toward detector 124 such that a percentage of the intensity of light received by programmable wavelength filter 122 at the selected wavelengths 126 is directed toward detector 124. As an illustrative example, programmable wavelength filter 122 may be configured to direct about 80% of the intensity of light at the first wavelength 126-1 toward detector 124 and/or about 60% of the intensity of light at the second wavelength 126-2 toward detector 124. Programmable wavelength filter 122 may be implemented by a digital micromirror device (DMD), a liquid crystal filter, or any other suitable filter device configured to selectively direct portions of wavelengths 126 of scattered light 116 toward detector 124.

Detector 124 is configured to receive light directed toward detector 124 by programmable wavelength filter 122 and detect or measure an intensity of light at each wavelength 126 received by detector 124. Detector 124 may be implemented by any suitable optical detector, such as, but not limited to, one or more of a photodiode, a Charge Coupled Device (CCD), or a single channel detector. Detector 124 may further be configured to generate a signal representative of intensity of light at wavelengths 126 detected by detector 124 and output the signal to controller 106.

Spectrometer 104 may include additional or alternative components as may serve a particular implementation, such as one or more optical devices (e.g., an entrance slit, a lens, a filter, a mirror, etc.) configured to direct light toward grating 120, programmable wavelength filter 122, and/or detector 124. As an illustrative example, spectrometer 104 may include a collimating lens configured to direct light to grating 120, a focusing lens configured to direct light to programmable wavelength filter 122, and/or a collection lens configured to direct light to detector 124.

Controller 106 may be communicatively coupled with and configured to control operations of light source 102, programmable wavelength filter 122, and detector 124. For example, controller 106 may be configured to control operation of various hardware components included in light source 102, programmable wavelength filter 122, and detector 124. To illustrate, controller 106 may be configured to control one or more parameters (e.g., intensity, wavelength, frequency, timing, etc.) of light 108 generated and emitted by light source 102 and/or selectively control wavelengths 126 of scattered light 116 filtered by programmable wavelength filter 122. Controller 106 may further be configured to receive the signal output by detector 124 and/or determine one or more attributes of the one or more analytes included in sample 110 based on the signal received by detector 124.

Controller 106 may also include and/or provide a user interface configured to enable interaction between a user of spectrometer 104 and controller 106. The user may interact with controller 106 via the user interface by tactile, visual, auditory, and/or other sensory type communication. For example, the user interface may include a display device (e.g., liquid crystal display (LCD) display screen, a touch screen, etc.) for displaying information (e.g., mass spectra, notifications, etc.) to the user. The user interface may also include an input device (e.g., a keyboard, a mouse, a touchscreen device, etc.) that allows the user to provide input to controller 106. In other examples the display device and/or input device may be separate from, but communicatively coupled to, controller 106. For instance, the display device and the input device may be included in a computer (e.g., a desktop computer, a laptop computer, etc.) communicatively connected to controller 106 by way of a wired connection (e.g., by one or more cables) and/or a wireless connection.

Controller 106 may include any suitable hardware (e.g., a processor, circuitry, etc.) and/or software as may serve a particular implementation. While FIG. 1 shows that controller 106 is separate from spectrometer 104, controller 106 may alternatively be included in whole or in part within spectrometer 104. In some examples, controller 106 includes a computing device communicatively coupled to spectrometer 104 by way of a wired connection (e.g., a cable), a wireless connection, and/or a network (e.g., a local area network, a wireless network (e.g., Wi-Fi), a wide area network, the Internet, a cellular data network, etc.).

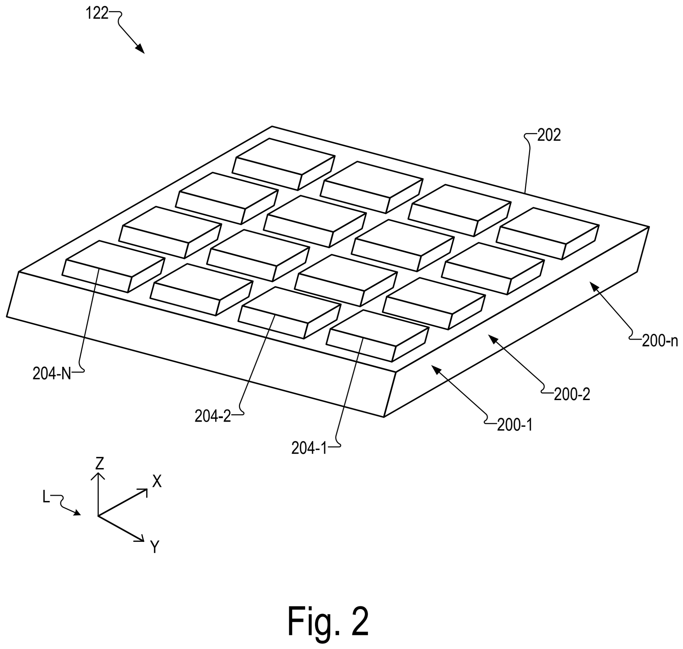

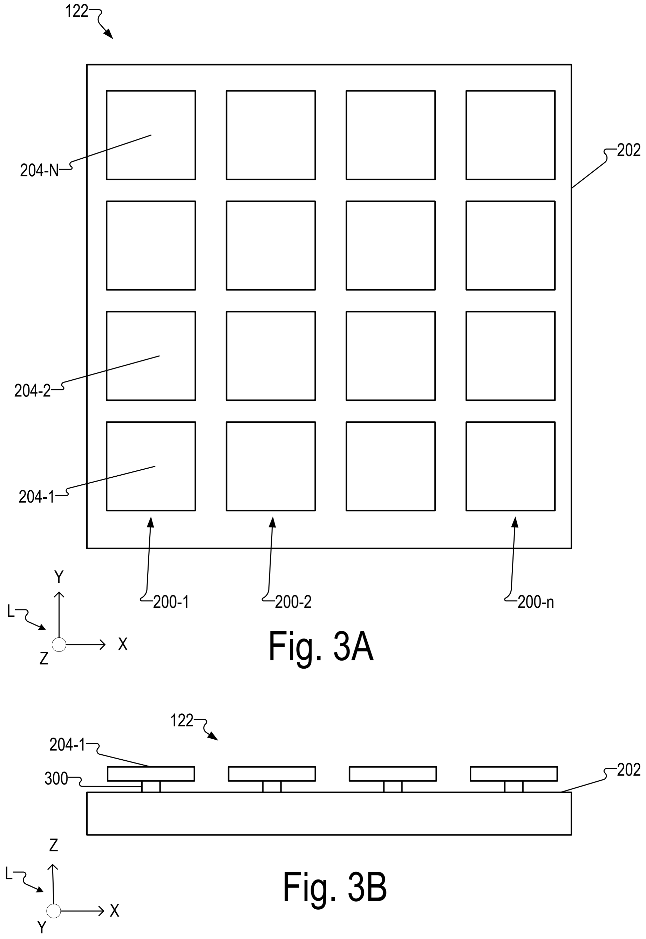

FIGS. 2-3B show an illustrative programmable wavelength filter 122. For example, FIG. 2 shows a perspective view of programmable wavelength filter 122, FIG. 3A shows a front view of programmable wavelength filter 122, and FIG. 3B shows a side view of programmable wavelength filter 122.

As shown, programmable wavelength filter 122 includes a plurality of pixel columns 200 (e.g., pixel columns 200-1 through 200-n) arranged along an x-direction relative to a surface 202 of programmable wavelength filter 122. Each pixel column 200 includes a plurality of pixels 204 (e.g., pixels 204-1 through 204-N) arranged along a y-direction relative to surface 202 of programmable wavelength filter 122 so that each pixel column 200 includes a total of N pixels. Accordingly, pixels 204 form a two-dimensional (2D) array of pixels 204 along the x-direction and y-direction of programmable wavelength filter 122. While the illustrated example shows programmable wavelength filter 122 having the same amount of pixel columns 200 in the x-direction and pixels 204 in the y-direction, programmable wavelength filter 122 may include any suitable number of pixel columns 200 and/or pixels 204 (e.g., pixel columns 200 may include more or less pixels 204 in each pixel column 200 than the number of pixel columns 200, the number of pixels 204 in each pixel column 200 may vary between pixel columns 200, etc.).

Each pixel column 200 is associated with a particular wavelength 126 of scattered light 116 such that each pixel column 200 is configured to receive the particular wavelength 126 of scattered light 116. For example, each wavelength 126 separated by grating 120 is directed to a different pixel column 200 of programmable wavelength filter 122. To illustrate, a first pixel column 200-1 is associated with first wavelength 126-1 such that first pixel column 200-1 is configured to receive light at first wavelength 126-1 (e.g., grating 120 is configured to direct the first wavelength 126-1 of scattered light 116 toward first pixel column 200-1), a second pixel column 200-2 is associated with second wavelength 126-2 such that second pixel column 200-2 is configured to receive light at second wavelength 126-2 (e.g., grating 120 is configured to direct the second wavelength 126-2 of scattered light 116 toward second pixel column 200-2), and so on. Accordingly, grating 120 is configured to distribute the plurality of wavelengths 126 of scattered light 116 in the x-direction such that each pixel column 200 is configured to receive a distinct wavelength 126. Moreover, grating 120 is configured to distribute light at each wavelength 126 in the y-direction along the plurality of pixels 204 included in each pixel column 200.

Pixels 204 are configured to selectively direct light received by pixels 204 toward detector 124. For example, any number of pixels 204 included in a pixel column 200 may be enabled to direct light toward detector 124 and/or any number of pixels 204 in a pixel column 200 may be disabled to not direct light toward detector 124. In some examples, the disabled pixels 204 may block light and/or direct light away from detector 124. To illustrate, all pixels 204 in a pixel column 200 may be enabled to direct all light received at a particular wavelength 126 toward detector 124, all pixels 204 in a pixel column 200 may be disabled to not direct any light received at a particular wavelength 126 toward detector 124, and/or a portion of pixels 204 in a pixel column 200 may be enabled while another portion of pixels 204 in the pixel column 200 are disabled to direct a portion of light received at a particular wavelength 126 toward detector 124.

In the illustrated implementation, programmable wavelength filter 122 is implemented by a DMD such that each pixel 204 includes a micromirror configured to reflect light. As shown in FIG. 3B, micromirrors of pixels 204 are coupled to surface 202 of programmable wavelength filter 122 by a support 300 such that each micromirror is tiltable relative to surface 202 (e.g., in the x-direction and/or y-direction). To illustrate, each micromirror may tilt or rotate relative to a plane defined by surface 202 to selectively direct light reflected by the micromirror toward and/or away from detector 124. Each micromirror may be controlled or positioned independently (e.g., by controller 106) relative to other micromirrors in each pixel column 200. Accordingly, pixels 204 in each pixel column 200 that are enabled may be positioned relative to surface 202 to direct light toward detector 124 and pixels 204 in each pixel column 200 that are disabled may be positioned relative to surface 202 to direct light away from detector 124. While the illustrated example shows programmable wavelength filter 122 implemented as a DMD, programmable wavelength filter 122 may be implemented by other suitable optical filters, such as a liquid crystal filter.

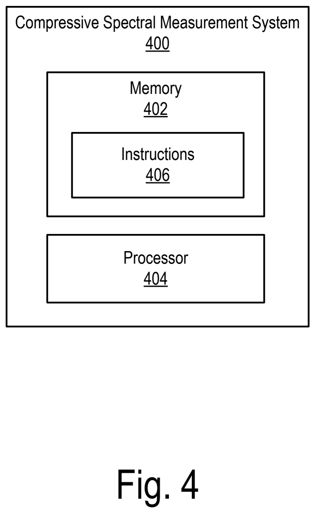

FIG. 4 shows an illustrative implementation 400 of a compressive spectral measurement system 400 ("system 400"). System 400 may be implemented entirely or in part by spectrometry system 100 and/or spectrometer 104 (e.g., by controller 106) and configured to perform one or more operations of compressive spectral measurements as described herein. Alternatively, system 400 may be implemented separately from spectrometry system 100.

As shown, system 400 may include, without limitation, memory 402 and at least one processor 404 selectively and communicatively coupled to one another. Memory 402 and processor 404 may each include or be implemented by hardware and/or software components (e.g., processors, memories, communication interfaces, instructions stored in memory for execution by the processors, etc.). In some examples, memory 402 and processor 404 may be distributed between multiple devices and/or multiple locations as may serve a particular implementation.

Memory 402 may maintain (e.g., store) executable data used by processor 404 to perform one or more of the illustrative operations described herein. For example, memory 402 may store instructions 406 that may be executed by processor 404 to perform one or more of the operations described herein. Instructions 406 may be implemented by any suitable application, software, code, and/or other executable data instance.

Memory 402 may also maintain any data acquired, received, generated, managed, used, and/or transmitted by processor 404. For example, memory 402 may maintain data acquired by processor 404 from one or more components of spectrometry system 100 (e.g., acquired spectral measurement data), data acquired by processor 404 from one or more other sources, and/or data generated by processor 404. Any of the data described herein (e.g., any of the datasets described herein, such as spectral measurement data) may be maintained by memory 402 and/or by a separate storage facility communicatively coupled to system 400.

Processor 404 may be configured to perform (e.g., execute instructions 406 stored in memory 402 to perform) various processing operations described herein. It will be recognized that the operations and examples described herein are merely illustrative of the many different types of operations that may be performed by processor 404. In the description herein, any references to operations performed by system 400 may be understood to be performed by processor 404 of system 400. Furthermore, in the description herein, any operations performed by system 400 may be understood to include system 400 directing or instructing another system or device (e.g., one or more components of spectrometer 104 or spectrometry system 100) to perform the operations.

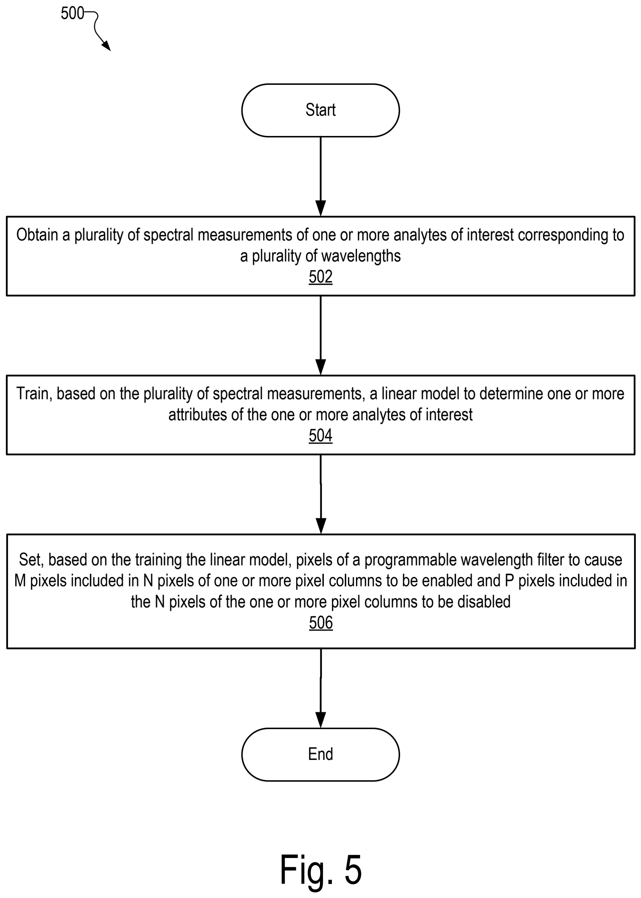

FIG. 5 shows an illustrative method 500 of performing compressive spectral measurements using a programmable wavelength filter (e.g., programmable wavelength filter 122). While FIG. 5 shows illustrative operations according to one embodiment, other embodiments may omit, add to, reorder, and/or modify any of the operations shown in FIG. 5. One or more of the operations shown in FIG. 5 may be performed by spectrometry system 100, spectrometer 104, and/or system 400, any components included therein, and/or any implementations thereof.

As shown in FIG. 5, method 500 includes obtaining a plurality of spectral measurements of one or more analytes of interest corresponding to a plurality of wavelengths at operation 502, training, based on the plurality of spectral measurements, a linear model to determine one or more attributes of the one or more analytes of interest at operation 504, and setting, based on the training the linear model, pixels (e.g., pixels 204) of the programmable wavelength filter to cause M pixels included in N pixels of one or more pixel columns (e.g., pixel columns 200) to be enabled and P pixels included in the N pixels of the one or more pixel columns to be disabled at operation 506. Operations 502-506 will now be described in more detail.

In operation 502, a plurality of spectral measurements of one or more analytes of interest corresponding to a plurality of wavelengths is obtained. For example, a sample (e.g., sample 110) may be known or predicted to include one or more analytes of interest for which one or more attributes are desired to be determined. Accordingly, spectral measurements associated with each of the one or more analytes of interest are obtained (e.g., by performing spectral measurements, accessing previously performed spectral measurements, and/or querying an existing database of spectral measurements), such as at different concentrations of the one or more analytes. The plurality of spectral measurements may include measurements of intensity of light measured over a range of a plurality of wavelengths based on each of the one or more analytes (e.g., light scattered in response to exciting each of the one or more analytes). In some examples, the plurality of spectral measurements include a spectrum associated with each of the one or more analytes that is plotted as a function of intensity of light relative to wavelength of the light.

In some examples, the obtaining the plurality of spectral measurements includes accessing data representative of spectral measurements associated with the one or more analytes, such as spectral measurements that are known and/or have been previously performed. For example, the data may be stored within a database such that operation 502 may include querying the database to identify spectral measurements associated with the one or more analytes of interest. The database may be implemented in any suitable format for storing data for access by system 400, such as a database that is populated prior to the detection of scattered light emitted by the sample. Any of the possible spectra associated with analytes in the sample may be included in the database.

Additionally or alternatively, the obtaining the plurality of spectral measurements includes performing the plurality of spectral measurements, such as by using spectrometry system 100 and/or another spectral measurement system separate from spectrometry system 100. Performing the spectral measurements may include measuring an intensity of light associated with each of the one or more analytes (e.g., light scattered by each of the one or more analytes) over a range of the plurality of wavelengths. To illustrate, a light source (e.g., light source 102) illuminates the sample with light (e.g., light 108). As a result of the analyte being illuminated by the light, the sample emits scattered light (e.g., scattered light 116) having various intensities at a plurality of wavelengths (e.g., wavelengths 126) that is measured by a detector (e.g., detector 124). In some examples, the spectral measurements include measurements over an entire range of wavelengths in the scattered light or a portion of the range of wavelengths in the scattered light.

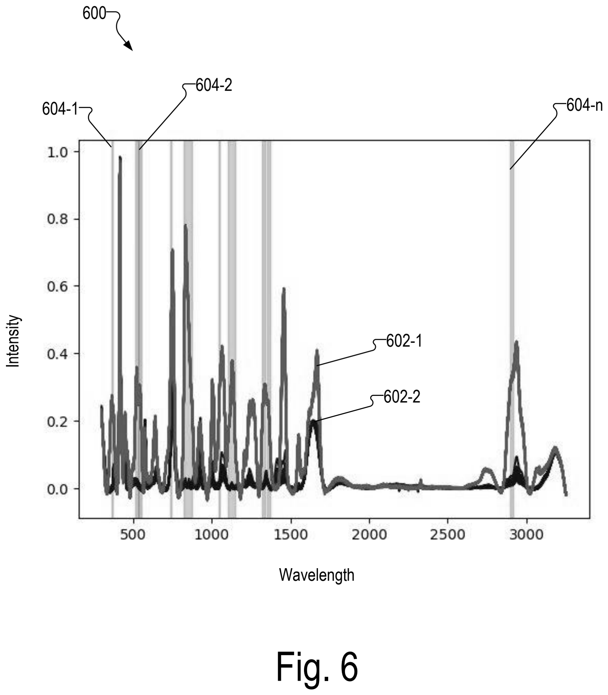

As an illustrative example, FIG. 6 shows a plot 600 of a plurality of spectral measurements associated with a first analyte and a second analyte. As shown, the plurality of spectral measurements includes a first spectrum 602-1 representative of measurements of intensity of light associated with the first analyte plotted as a function of wavelength and a second spectrum 602-2 representative of measurements of intensity of light associated with the second analyte plotted as a function of wavelength. First spectrum 602-1 and second spectrum 602-2 each include one or more features such as one or more peaks at various wavelengths. In some examples, the one or more peaks occur at certain wavelengths unique to the first analyte and/or the second analyte (e.g., the wavelength of each peak corresponds to a frequency of light absorbed by the first analyte and/or the second analyte that excited a vibration and scattered light). Accordingly, the first spectrum 602-1 may be indicative of one or more attributes of the first analyte and the second spectrum 602-2 may be indicative of one or more attributes of the second analyte (e.g., wavelengths at which the one or more peaks occur may be indicative of an identity of the first analyte and/or the second analyte, the intensity of the one or more peaks may be indicative of a concentration of the first analyte and/or the second analyte, etc.).

Returning to FIG. 5, in operation 504, a linear model is trained, based on the plurality of spectral measurements, to determine one or more attributes of the one or more analytes of interest. The linear model is implemented by any suitable linear model (e.g., a model that is restricted to linear operations, such as multiplication, division, addition, and/or subtraction) configured to determine one or more attributes of the one or more analytes of interest, such as a partial least squares (PLS) model, a principal component analysis (PCA) model, a total least squares (TLS) model, etc. In some examples, the training the linear model includes generating one or more algorithms that fit the plurality of spectral measurements to the one or more attributes of the one or more analytes of interest such that the one or more algorithms include one or more coefficients in relation to a vector of an intensity of light as a function of wavelength.

As an illustrative example, the plurality of spectral measurements (e.g., one or more spectra 602) associated with known concentrations of an analyte are input into a PLS model. The PLS model is configured to fit the plurality of spectral measurements to the concentrations of the analyte such as by generating, based on the plurality of spectral measurements, an algorithm that determines the analyte concentration based on a vector of intensity of light as a function of wavelength. To illustrate, the algorithm is generated by the PLS model based on the formulas shown below. $y = x ′ ⋅ \vec{B} + {\vec{B}}_{0}$ $x ′ = \frac{x - {x}_{μ}}{{x}_{σ}}$

In these equations, *y* is the concentration of the analyte of interest, *x* is the vector of light intensity as a function of wavelength (e.g., *x =* {*Iλ*₁, *Iλ*₂,*.*.., *Iλ*ₙ}), *x_{µ}* is the mean of *x, x_{σ}* is the standard deviation of *x, B̅* is a frequency coefficient, and *̅B̅*̅₀ is an intercept coefficient. Accordingly, the formulas can be rewritten as shown below. $y = \frac{x ⋅ \vec{B}}{{x}_{σ}} + {\vec{B}}_{0} - \frac{{x}_{μ} ⋅ \vec{B}}{{x}_{σ}}$

The formula can further be simplified as follows. $y = x ⋅ \vec{B ′} + \vec{C}$ $\vec{B ′} = \frac{\vec{B}}{{x}_{σ}}$ $\vec{C} = {\vec{B}}_{0} - \frac{{x}_{μ} ⋅ \vec{B}}{{x}_{σ}}$

In some examples, the training the linear model further includes adapting the algorithm generated by the linear model to the programmable wavelength filter. For example, *̅B̅'̅*̅ is adapted as the relative throughput by wavelength for the programmable wavelength filter, such as based on the number of pixels included in each pixel column of the programmable wavelength filter. As an illustrative example, the algorithm is digitized to adapt to the programmable wavelength filter as shown below. ${\vec{B}}_{d}^{+} = {round}_{int} \left(pos\left(\vec{B ′}\right)⋅n\right) , {\vec{B}}_{d}^{-} = {round}_{int} \left(-neg\left(\vec{B ′}\right)⋅n\right)$ $y = x ⋅ \frac{{\vec{B}}_{d}^{+}}{n} - x ⋅ \frac{{\vec{B}}_{d}^{-}}{n} + \vec{C}$

In these equations, *roundᵢₙₜ* is a function that rounds to the nearest integer, *pos* is a function that selects only positive values (setting negative values to zero), *neg* is a function that selects only negative values (setting positive values to zero), and *n* is the number of pixels included in each pixel column. For example, the coefficients of the algorithm generated by the PLS model may include both positive and negative values such that *̅B̅'̅*̅ is digitized to include a first coefficient vector ${\vec{B}}_{d}^{+}$ directed to the positive values and a second coefficient vector ${\vec{B}}_{d}^{-}$ directed to the negative values. With this digitized version of the coefficient vector, each value of ${\vec{B}}_{d}^{+}$ and ${\vec{B}}_{d}^{-}$ corresponds with the number of pixels in each pixel column associated with each wavelength selected to direct light toward the detector.

Based on the first and second coefficient vectors, a first and second measurement algorithm is determined. For example, a first measurement formula (*M* ⁺) is determined for the first coefficient vector directed to positive values and a second measurement formula (*M* ⁻) is determined for the second coefficient vector directed to the negative values. Illustrative first and second measurement formulas are shown below. ${M}^{+} = x ⋅ {\vec{B}}_{d}^{+} , {M}^{-} = x ⋅ {\vec{B}}_{d}^{-}$

The first and second measurement formulas can be substituted into the digitized algorithm for determining analyte concentration based on intensities measured using the programmable wavelength filter as shown below. $y = \frac{{M}^{+}}{n} - \frac{{M}^{-}}{n} + \vec{C}$

In some examples, the algorithm generated by the linear model is normalized based on the plurality of spectral measurements such as relative to a peak intensity included in the plurality of spectral measurements. For example, an integrated peak height may be used to normalize spectra included in the plurality of spectral measurements as shown below. ${x}_{pre} = x / {P}_{internal}$ ${P}_{internal} = {\int }_{{λ}_{l}}^{{λ}_{u}} I \left(λ\right) dλ$

In these equations, *Pᵢₙₜₑᵣₙₐₗ* is the integrated peak of an internal standard peak (e.g., a water peak) included in the plurality of spectral measurements, with specific upper wavelengths *λᵤ* and lower wavelengths *λₗ*. After preprocessing the plurality of spectral measurements, *xₚᵣₑ* is used to train the linear model in place of *x*. Moreover, a filter is added that accepts all light between the specific upper wavelengths *λᵤ* and lower wavelengths *λₗ* of the integrated peak to measure the integrated peak intensity *Pₘ.* Accordingly, the digitized algorithm generated by the linear model can be modified to include the integrated peak intensity *Pₘ* as shown below. $y = \frac{{M}^{+}}{n ⋅ {P}_{m}} - \frac{{M}^{-}}{n ⋅ {P}_{m}} + \vec{C}$

This results in an *z* + 1 number of filters and/or measurements, where *z* is the number of *y* values being predicted. As an illustrative example, to determine the concentration of a first analyte and a second analyte, five spectral measurements using the programmable wavelength filter 122 performed (e.g., a first measurement for the positive value coefficients of the linear model (*M*⁺) associated with the first analyte, a second measurement for the negative value coefficients of the linear model (*M*⁻) associated with the first analyte, a third measurement for the positive value coefficients of the linear model (*M*⁺) associated with the second analyte, a fourth measurement for the negative value coefficients of the linear model (*M*⁻) associated with the second analyte, and a fifth measurement for the normalization).

In operation 506, pixels of the programmable wavelength filter are set based on training the linear model to cause M pixels included in the N pixels of at least one pixel column to be enabled and P pixels included in the N pixels of the at least one pixel column to be disabled (where M and P are both greater than zero). The enabled pixels of the programmable wavelength filter are configured to direct light to the detector and disabled pixels of the programmable wavelength filter are configured to not direct light to the detector.

In some examples, setting pixels of the programmable wavelength filter includes selecting one or more wavelengths included in the plurality of wavelengths of the plurality of spectral measurements. For example, a subset of wavelengths included in the plurality of wavelengths is selected for setting the programmable wavelength filter such that compressive spectral measurements are performed using the programmable wavelength filter at the subset of wavelengths. The one or more wavelengths may be selected based on wavelengths that are indicative of and/or useful in determining the one or more attributes of the one or more analytes included in the sample. To illustrate, wavelengths and/or a range of wavelengths associated with peaks at which an analyte scatters light may be selected from the plurality of wavelengths.

As an illustrative example, FIG. 6 shows a selected wavelengths 604 (e.g., selected wavelengths 604-1 through 604-n) that are selected for determining one or more attributes of the first analyte associated with first spectrum 602-1 and the second analyte associated with second spectrum 602-2. The wavelengths may be selected at peaks and/or regions where intensities of first spectrum 602-1 and second spectrum 602-2 are different to distinguish between the first analyte and the second analyte. For example, selected wavelengths 604 include various ranges of wavelengths at which an intensity of the first spectrum 602-1 differs more than an intensity of the second spectrum 602-2 at other wavelengths. Accordingly, setting the pixels of the programmable wavelength filter includes enabling pixels in pixel columns associated with selected wavelengths 604 to measure intensity of light emitted from the sample at selected wavelengths 604. Additionally, pixels in pixel columns associated with wavelengths that are not selected are not enabled such as to not measure intensity of light emitted from the sample at those wavelengths. This compressive spectral measurement technique may reduce computing resources by only measuring the intensity of light at selected wavelengths 604 included in the plurality of wavelengths emitted from the sample.

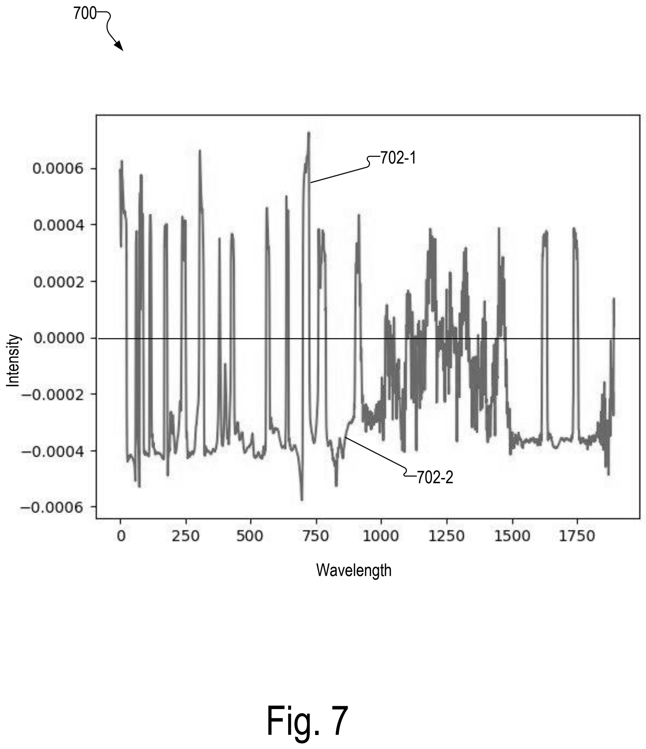

In some examples, setting the pixels of the programmable wavelength filter includes extracting one or more coefficients (e.g., frequency coefficients, intercept coefficients, etc.) from the algorithm generated by the linear model. As an illustrative example, FIG. 7 shows a plot 700 of coefficients of an algorithm generated by the linear model as a function of wavelength. As shown, the coefficients include positive values 702-1 that are greater than zero and negative values 702-2 that are less than zero. The coefficients correspond to an amount of intensity of light to be measured at each of the respective wavelengths. For example, each coefficient is representative of a percentage of intensity of light to be measured at the respective wavelength relative to the intensity of light that can be measured at the respective wavelength. Because each wavelength and/or range of wavelengths is associated with a particular pixel column, setting the pixels in each particular pixel column includes enabling an amount of pixels in each particular pixel column to correspond to the percentage of intensity of light to be measured represented by the coefficients at the wavelength associated with the particular pixel column. In instances where a pixel column is associated with a narrow range of wavelengths, a parameter (e.g., a mean, a median, a mode, etc.) of the coefficients associated with the range of wavelengths may be used to enable pixels in the pixel column to direct the percentage of intensity of light toward the detector based on the parameter of the coefficients.

As an illustrative example, a first coefficient at a first wavelength may indicate to measure 80% of the intensity of light that can be measured at the first wavelength such that pixels included in a first pixel column associated with the first wavelength are enabled to direct 80% of the intensity of light received at the first wavelength toward the detector. Likewise, a second coefficient at a second wavelength may indicate to measure 60% of the intensity of light at the second wavelength such that pixels included in a second pixel column associated with the second wavelength are enabled to direct 60% of the intensity of light received at the second wavelength toward the detector.

In some examples, the number of pixels enabled in a pixel column directly corresponds to the percentage of the intensity of light directed to the detector. As an illustrative example, each pixel column may include 800 pixels such that enabling pixels in the first pixel column to direct 80% of the intensity of light to the detector at the first wavelength includes enabling 80% of the pixels in the first pixel column (e.g., enabling 640 pixels of the 800 pixels).

Alternatively, the number of pixels enabled in a pixel column may not directly correspond to the percentage of the intensity of light directed to the detector. For example, in instances where an intensity of the light is concentrated at a portion of a pixel column, the percentage of pixels enabled in the pixel column is calibrated to account for the concentration of light (e.g., the amount of pixels enabled in the pixel column may be more or less than the percentage of pixels corresponding to the percentage of the intensity of light to be measured at the pixel column). To illustrate, if a portion of the intensity of light at the first wavelength is concentrated at a central portion of the first pixel column, more than 80% of pixels in the first pixel column may be enabled to direct 80% of the intensity of light at the first wavelength to the detector and/or less pixels in the central portion of the first pixel column may be enabled to direct 80% of the intensity of light at the first wavelength to the detector. Accordingly, setting pixels of the programmable wavelength filter may be based on calibrating the pixels relative to non-uniform intensity portions across the pixel columns. In some instances, the calibration may be determined based on a calibration procedure to determine on which pixels the intensity of light is concentrated. The calibration procedure may further include mapping pixels in the pixel columns to select intensity percentages (e.g., determining which pixels to enable in the pixels columns to correspond to various intensity percentages).

Additionally or alternatively, an astigmatism may be introduced to spread the intensity of light more evenly across (e.g., in the y-direction) the first pixel column. For example, an optical device, such as an entrance slit and/or a lens, may be positioned upstream of the programmable wavelength filter 122 to evenly spread light 116 across a respective pixel column.

Accordingly, setting pixels of the programmable wavelength filter may include selecting one or more pixel columns associated with selected wavelengths (e.g., wavelengths useful for determining one or more attributes of the one or more analytes in the sample), selecting a number of pixels in the selected one or more pixel columns to be enabled, and/or selecting which pixels in the selected one or more pixel columns to be enabled. Based on the selected pixels to be enabled, setting the pixels of the programmable wavelength filter includes setting the selected pixels to an enabled position to direct light to the detector (and setting the remaining pixels to a disabled position to not direct light to the detector).

In some examples, setting pixels of the programmable wavelength filter includes setting a first set of pixels to perform a first measurement and setting a second set of pixels to perform a second measurement. To illustrate, the first set of pixels may correspond to coefficients of the algorithm generated by the linear model having positive values (e.g., positive values 702-1) with coefficients of the algorithm having negative values (e.g., negative values 702-2) set to zero. The second set of pixels may correspond to absolute values of the coefficients of the algorithm having negative values with coefficients of the algorithm having positive values set to zero. Additionally, a third set of pixels of the programmable wavelength filter may be set to perform a third measurement based on normalizing the plurality of spectral measurements relative to a peak intensity included in the plurality of spectral measurements.

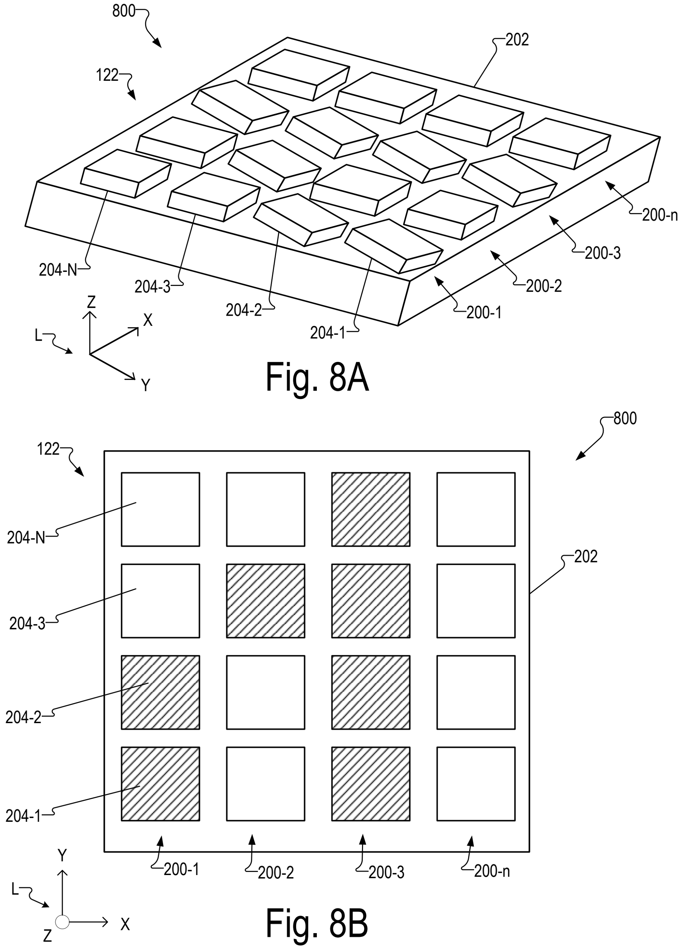

In instances where the programmable wavelength filter is implemented by a DMD including an array of micromirrors, setting pixels of the programmable wavelength filter includes positioning micromirrors in the array of micromirrors such that micromirrors corresponding to enabled pixels are positioned to direct light toward the detector and micromirrors corresponding to disabled pixels are positioned to direct light away from the detector. As an illustrative example, FIGS. 8A and 8B show an implementation 800 of setting pixels 204 of programmable wavelength filter 122. As shown, pixels 204 set to an enabled position (e.g., and shown as shaded in FIG. 8B for illustrative purposes) include micromirrors that are tilted relative to surface 202 of programmable wavelength filter 122 to direct light toward the detector. Pixels 204 set to a disabled position include micromirrors that are parallel relative to surface 202 of programmable wavelength filter 122 to direct light away from the detector. While enabled pixels 204 are shown as being tilted and disabled pixels 204 are shown as being not tilted, still other suitable positions of enabled and/or disabled pixels 204 may be used. For example, enabled pixels 204 may be positioned parallel to surface 202 and disabled pixels 204 may be tilted relative to surface 202. Additionally or alternatively, enabled and/or disabled pixels 204 may be tilted at varying angles relative to surface 202.

To illustrate, in first pixel column 200-1 associated with first wavelength 126-1, two pixels 204 are set to the enabled position (e.g., M=2) and another two pixels 204 are set to the disabled position (e.g., P=2) such as to direct 50% of intensity of light at the first wavelength 126-1 to detector 124. In second pixel column 200-2 associated with second wavelength 126-2, one pixel 204 is set to the enabled position (e.g., M=1) and the other three pixels 204 are set to the disabled position (e.g., P=3) such as to direct 25% of intensity of light at the second wavelength 126-2 to detector 124. In third pixel column 200-3 associated with third wavelength 126-3, all pixels 204 are set to the enabled position (e.g., M=4 and P=0) such as to direct 100% of intensity of light at the third wavelength 126-3 to detector 124. In an end pixel column 200-n associated with an end wavelength 126-n, all pixels 204 are set to the disabled position (e.g., M=0 and P=4) such as to direct 0% of intensity of light at the end wavelength 126-n to detector 124.

Using this configuration, the throughput of intensity of light at each wavelength may be modulated by the programmable wavelength filter in steps by the number of pixels included in each pixel column. For instance, a programmable wavelength filter having 800 pixels in each pixel column may be configured to modulate the intensity of light associated with each pixel column in increments of 1/800.

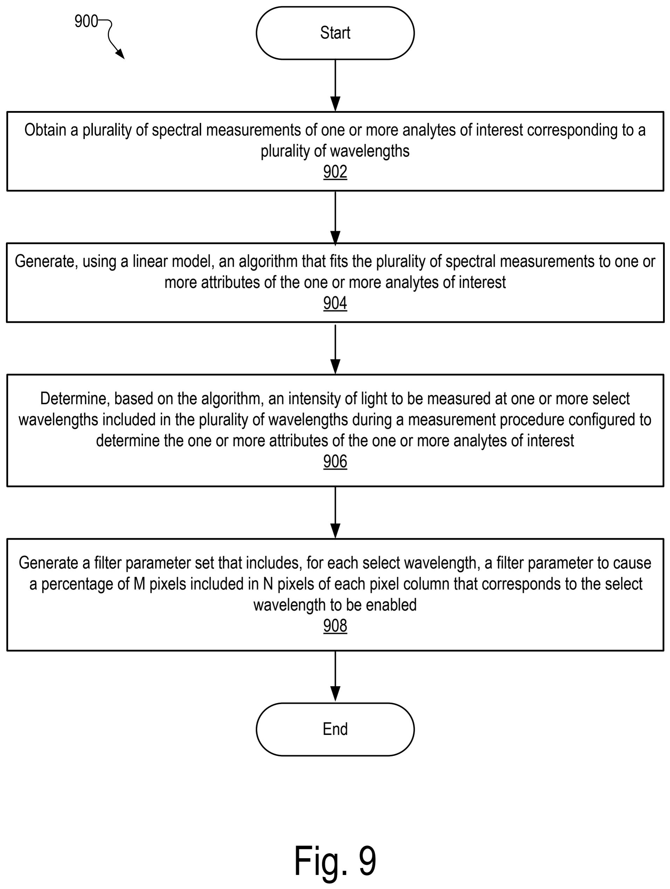

FIG. 9 shows another illustrative method 900 of providing settings for a programmable wavelength filter (e.g., programmable wavelength filter 122). While FIG. 9 shows illustrative operations according to one embodiment, other embodiments may omit, add to, reorder, and/or modify any of the operations shown in FIG. 9. One or more of the operations shown in FIG. 9 may be performed by spectrometry system 100, spectrometer 104, and/or system 400, any components included therein, and/or any implementations thereof.

As shown in FIG. 9, method 900 includes, at operation 902, obtaining a plurality of spectral measurements of one or more analytes of interest corresponding to a plurality of wavelengths. The plurality of spectral measurements include spectra of measurements of intensity of light measured over a range of a plurality of wavelengths based on each of the one or more analytes of interest, such as at different concentrations of the one or more analytes. In some examples, the plurality of spectral measurements are obtained by performing measurements (e.g., using spectrometry system 100), accessing previously performed spectral measurements, and/or querying an existing database of spectral measurements.

At operation 904, an algorithm is generated, using a linear model, that fits the plurality of spectral measurements to one or more attributes of the one or more analytes of interest. As an illustrative example, the linear model is configured to fit the plurality of spectral measurements to a concentration of an analyte such as by generating an algorithm that determines the analyte concentration based on a vector of intensity of light as a function of wavelength. The algorithm is adapted to the programmable wavelength filter such that the algorithm includes one or more coefficients representative of a percentage of the intensity of light that can be measured at one or more pixel columns (e.g., pixel columns 200) of the programmable wavelength filter.

At operation 906, based on the algorithm, an intensity of light is determined to be measured at one or more select wavelengths included in the plurality of wavelengths during a measurement procedure configured to determine the one or more attributes of the one or more analytes of interest. For example, based on adapting the algorithm to the programmable wavelength filter, one or more coefficients are extracted from the algorithm to determine the intensity of light to be measured at one or more select wavelengths. To illustrate, the one or more coefficients are selected based on selecting one or more wavelengths included in the plurality of wavelengths of the plurality of spectral measurements that are indicative of the one or more attributes of the one or more analytes as determined by the one or more coefficients of the algorithm. In some examples, the linear model generates a single algorithm in which coefficients are associated with multiple analytes (e.g., coefficients associated with a first analyte and a second analyte are extracted from the same algorithm). Alternatively, the linear model generates multiple algorithms in which coefficients of each algorithm are associated with each analyte (e.g., coefficients associated with the first analyte are extracted from a first algorithm and coefficients associated with the second analyte are extracted from another algorithm).

At operation 908, a filter parameter set is generated that includes, for each select wavelength, a filter parameter to cause a percentage of M pixels included in N pixels of each pixel column that corresponds to the select wavelength to be enabled. For example, the one or more coefficients of the algorithm are extracted to set pixels of one or more pixel columns to the percentage of the intensity of light that can be measured at the one or more pixel columns represented by the one or more coefficients. In some examples, a first filter parameter set is generated such as for coefficients of the algorithm associated with a first analyte and having positive values. To illustrate, the first filter parameter set may include a first filter parameter associated with a first pixel column of the programmable wavelength filter. The first filter parameter may be set by extracting a first coefficient having a first positive value at a first wavelength associated with the first pixel column from the algorithm and determining the intensity of light to be measured at the first wavelength based on the first positive value. The intensity of light to be measured at the first wavelength is adapted to the percentage of pixels in the first pixel column to be enabled such that the first filter parameter is set to cause M pixels included in the N pixels of the first pixel column corresponding to the percentage of pixels to be enabled and the remaining P pixels included in the N pixels of the first pixel column to be disabled during the measurement procedure. In some examples, the setting the first filter parameter further includes selecting which pixels in the first pixel column to enable that correspond to the percentage of pixels.

The first filter parameter set may further include a second filter parameter. To illustrate, a second coefficient having a second positive value at a second wavelength is extracted from the algorithm and the intensity of light to be measured at the second wavelength is determined based on the second positive value. The intensity of light to be measured at the second wavelength is adapted to the percentage of pixels in a second pixel column associated with the second wavelength to be enabled such that the second filter parameter is set to cause M pixels included in the N pixels of the second pixel column corresponding to the percentage of pixels to be enabled and the remaining P pixels included in the N pixels of the second pixel column to be disabled during the measurement procedure. In some examples, setting the second filter parameter further includes selecting which pixels in the second pixel column to enable that correspond to the percentage of pixels. Generating the first filter parameter set may further include setting additional filter parameters at additional wavelengths associated with coefficients of the algorithm associated with the first analyte and having positive values. Generating the first filter parameter set may further include setting pixels included in the pixel columns associated with wavelengths at which coefficients have negative or zero values to be disabled.

In some examples, generating the filter parameter set further includes setting the pixels of the programmable wavelength filter to operate in accordance with the filter parameter set. For example, select pixels of the programmable wavelength filter are set to be enabled according to the filter parameters associated with each pixel column of the filter parameter set (e.g., enabled pixels are set to be positioned to direct light towards the detector) and the remaining pixels of the programmable wavelength filter are set to be disabled according to the filter parameters of the filter parameter set (e.g., disabled pixels are set to be positioned to direct light away from the detector). In some examples, the number of pixels enabled in the one or more pixel columns directly corresponds to the percentage of the intensity of light represented by the one or more coefficients. Alternatively, the number of pixels enabled in a pixel column does not directly correspond to the percentage of the intensity of light represented by the one or more coefficients such as to account for a non-uniform distribution of light in a pixel column.

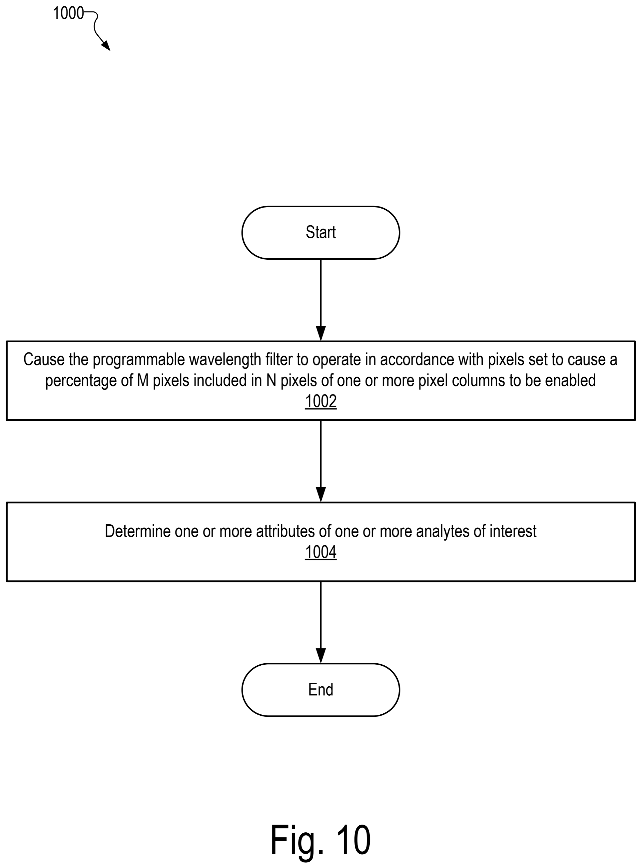

For example, FIG. 10 shows an illustrative method 1000 of performing measurements using a programmable wavelength filter (e.g., programmable wavelength filter 122). While FIG. 10 shows illustrative operations according to one embodiment, other embodiments may omit, add to, reorder, and/or modify any of the operations shown in FIG. 10. One or more of the operations shown in FIG. 10 may be performed by spectrometry system 100, spectrometer 104, and/or system 400, any components included therein, and/or any implementations thereof.

As shown, at operation 1002, the programmable wavelength filter is caused to operate in accordance with the pixels set to cause a percentage of M pixels included in N pixels of one or more pixels columns to be enabled, such as according to the filter parameter set provided above. To illustrate, the percentage of M pixels of the one or more pixel columns are positioned to direct light to the detector and the remaining pixels of the one or more pixel columns are positioned to direct light away from the detector. A light source (e.g., light source 102) is caused to generate light (e.g., light 108) that illuminates a sample (e.g., sample 110) and emits scattered light (e.g., scattered light 116) at a plurality of different wavelengths (e.g., wavelengths 126) from the illuminating light. The scattered light is separated into the plurality of different wavelengths (e.g., by grating 120) and directed to the programmable wavelength filter such that each wavelength is dispersed along an associated pixel column. The programmable wavelength filter is caused to operate in accordance with the set pixels such that the percentage of M pixels enabled in one or more selected pixel columns directs the percentage of intensity of light at the one or more selected wavelengths to the detector while the disabled pixels do not direct light to the detector (e.g., detector 124). The detector is caused to detect the percentage of intensity of light at the one or more selected wavelengths received from the programmable wavelength filter.

At operation 1004, the one or more attributes of the one or more analytes of interest are determined. In some examples, intensity of light measured at one or more particular wavelengths is indicative of an identity of the one or more analytes and/or a concentration of the one or more analytes. Moreover, the measured intensity of light at each of the one or more selected wavelengths detected by the detector is input into the algorithm generated by the linear model to determine the one or more attributes (e.g., the one or more attributes are output by the algorithm based on the measured intensity of light). Still other suitable methods may be used to perform compressive spectral measurements with the programmable wavelength filter.

As an illustrative example, the programmable wavelength filter may be used to perform a measurement procedure to determine the one or more attributes of the one or more analytes of interest. The measurement procedure may include performing two or less measurements using the programmable wavelength filter to determine one or more attributes of the one or more analytes of interest included in one sample. For example, the measurement procedure includes performing a first measurement associated with one or more coefficients of the algorithm having a positive value such that performing the first measurement includes causing the programmable wavelength filter to operate in accordance with the first filter parameter set. To illustrate, pixels in each pixel column are positioned according to each respective filter parameter of the first filter parameter set such that the enabled M pixels are positioned to direct light to the detector (e.g., detector 124) and the disabled P pixels are positioned to direct light away from the detector. During the first measurement, the light source is caused to generate light that illuminates the sample and emits scattered light at a plurality of different wavelengths from the illuminating light. The scattered light is separated into a plurality of component wavelengths and directed to the programmable wavelength filter such that each component wavelength is dispersed along an associated pixel column. The programmable wavelength filter is caused to operate in accordance with the set pixels of the first filter parameter set such that the enabled M pixels direct the percentage of intensity of light at the one or more selected wavelengths to the detector while the disabled P pixels do not direct light to the detector. The detector is caused to detect the percentage of intensity of light at the one or more selected wavelengths received from the programmable wavelength filter.

In some examples, the measurement procedure further includes performing a second measurement. The second measurement includes generating a second filter parameter set such as for coefficients of the algorithm associated with the first analyte and having negative values. To illustrate, a third coefficient of the algorithm having a first negative value at a third wavelength is extracted from the algorithm and the intensity of light to be measured at the third wavelength is determined based on an absolute value of the first negative value. The intensity of light to be measured at the third wavelength is adapted to the percentage of pixels in a third pixel column associated with the third wavelength to be enabled such that a third filter parameter included in the second filter parameter set is set to cause M pixels included in the N pixels of the third pixel column corresponding to the percentage of pixels to be enabled and the remaining P pixels included in the N pixels of the third pixel column to be disabled during the measurement procedure. In some examples, setting the third filter parameter further includes selecting which pixels in the third pixel column to enable that corresponds to the percentage of pixels.

Generating the second filter parameter set may further include setting a fourth filter parameter. To illustrate, a fourth coefficient having a second negative value at a fourth wavelength is extracted from the algorithm and the intensity of light to be measured at the fourth wavelength is determined based on an absolute value of the second negative value. The intensity of light to be measured at the fourth wavelength is adapted to the percentage of pixels in a fourth pixel column associated with the fourth wavelength to be enabled such that the fourth filter parameter is set to cause M pixels included in the N pixels of the fourth pixel column corresponding to the percentage of pixels to be enabled and the remaining P pixels included in the N pixels of the fourth pixel column to be disabled during the measurement procedure. In some examples, setting the fourth filter parameter further includes selecting which pixels in the fourth pixel column to enable that corresponds to the percentage of pixels. Generating the second filter parameter set may further include setting additional filter parameters at additional wavelengths associated with coefficients of the algorithm associated with the first analyte and having negative values. The generating the second filter parameter set may further include setting pixels included in the pixel columns associated with coefficients having positive or zero values to be disabled.

The performing the second measurement includes causing the programmable wavelength filter to operate in accordance with the second filter parameter set. To illustrate, pixels are positioned according to the filter parameters of the second filter parameter set such that the enabled M pixels are positioned to direct light to the detector and the disabled P pixels are positioned to direct light away from the detector. The light source is caused to generate light that illuminates sample and emits scattered light at different wavelengths from the illuminating light. The scattered light is separated into a plurality of component wavelengths and directed to the programmable wavelength filter such that each component wavelength is dispersed along an associated pixel column. The programmable wavelength filter is caused to operate in accordance with the set pixels of the second filter parameter set such that the enabled M pixels direct the percentage of intensity of light at the one or more selected wavelengths to the detector while the disabled P pixels do not direct light to the detector. The detector is caused to detect the percentage of intensity of light at the one or more selected wavelengths received from the programmable wavelength filter.

Based on the first measurement and the second measurement, the one or more attributes associated with the first analyte are determined. For example, the first measurement and the second measurement are input into the algorithm to determine the one or more attributes. In some examples, the measurement procedure further includes performing a third measurement such as to normalize the first and second measurements relative to a peak intensity (e.g., a water peak). Additionally or alternatively, the measurement procedure may further include performing additional measurements associated with a second analyte of interest included in the sample. For example, a fourth measurement may be performed associated with one or more coefficients of the algorithm having positive values associated with the second analyte and a fifth measurement may be performed associated with one or more coefficients of the algorithm having negative values associated with the second analyte. Based on the fourth and fifth measurements, the one or more attributes of the second analyte may be determined. In some examples, the fourth and fifth measurements are likewise normalized such as relative to the peak intensity measured in the third measurement. Still other suitable configurations for performing the measurement procedure may be used.

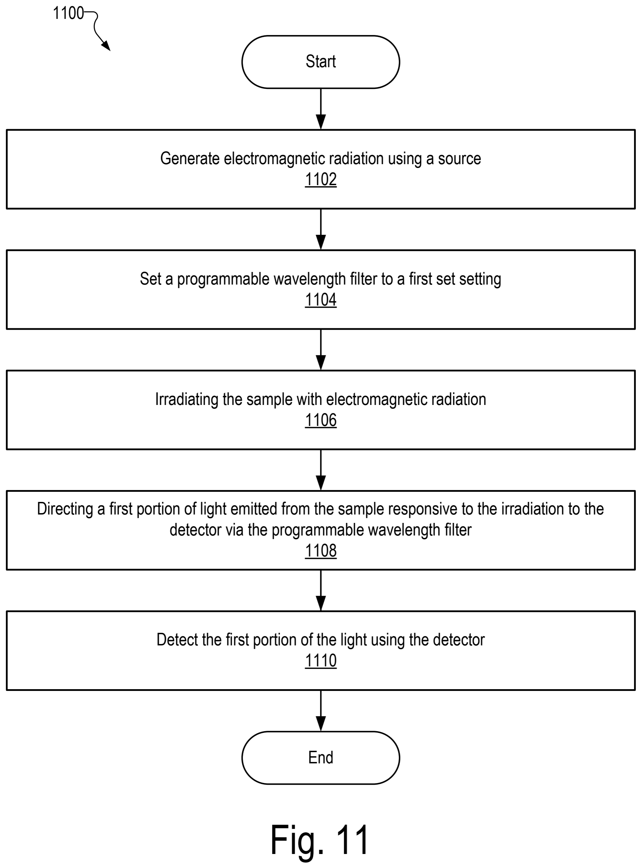

FIG. 11 shows an illustrative method 1100 for spectroscopic analysis using a programmable wavelength filter (e.g., programmable wavelength filter 122). While FIG. 11 shows illustrative operations according to one embodiment, other embodiments may omit, add to, reorder, and/or modify any of the operations shown in FIG. 11. One or more of the operations shown in FIG. 11 may be performed by spectrometry system 100, spectrometer 104, and/or system 400, any components included therein, and/or any implementations thereof.

As shown, at operation 1102, electromagnetic radiation is generated using a source (e.g., light source 102). In some examples, the electromagnetic radiation includes light (e.g., light 108).

At operation 1104, the programmable wavelength filter is set to a first setting. The programmable wavelength filter includes multiple pixels forming a plurality of pixel regions. Each pixel region is configured to direct light of a same wavelength to a detector (e.g., detector 124). In some examples, the pixels of the programmable wavelength filter are arranged in multiple pixel columns and each pixel region corresponds to one or more pixel columns.

At operation 1106, a sample (e.g., sample 110) is irradiated with the electromagnetic radiation.

At operation 1108, a first portion of the light emitted from the sample responsive to the irradiation is directed to the detector via the programmable wavelength filter. At least one pixel region of the programmable wavelength filter includes a first non-zero number of pixels directing the light emitted from the sample to the detector and a second non-zero number of pixels not directing the light emitted from the sample to the detector. Accordingly, at a particular wavelength corresponding to the at least one pixel region of the programmable wavelength filter, a non-zero fraction of the light emitted from the sample received by the programmable wavelength filter is directed to the detector.

At operation 1110, the first portion of the light is detected using the detector. In some examples, the detecting the first portion of the light includes detecting a total intensity of the first portion of the light. Additionally or alternatively, the detected first portion of the light may include a plurality of wavelengths.

In some examples, method 1100 further includes generating a linear model by fitting a plurality of spectral measurements from one or more analytes of interest to one or more attributes of the one or more analytes and determining the first setting of the programmable wavelength filter based on the linear model. The spectral measurements from the one or more analytes of interest may include a plurality of spectra from the one or more analytes of interest. Additionally, determining the first non-zero number and the second non-zero number may be based on the linear model. To illustrate, determining the first non-zero number and the second non-zero number may be based on coefficients of the linear model which have the same sign. In some examples, the first non-zero number of pixels for directing the light emitted from the sample to the detector are selected further based on a spatial distribution of the light received by the programmable wavelength filter.

In some examples, method 1100 further includes adjusting an astigmatism of the light emitted from the sample and determining the first setting based on the linear model and a distribution of the adjusted light on the programmable wavelength filter.

In some examples, method 1100 further includes setting the programmable wavelength filter to a second setting, irradiating the sample with the electromagnetic radiation, directing, via the programmable wavelength filter, a second portion of the light emitted from the sample to the detector, detecting , via the detector, the second portion of the light, and determining one or more sample attributes based on the detected first and second portions of the light. In some examples, the first setting and second setting are determined based on different signs of coefficients of the linear model.

In some examples, method 1100 further includes setting the programmable wavelength filter to a third setting, irradiating the sample with the electromagnetic radiation, directing, via the programmable wavelength filter, all emitted light received by the programmable wavelength filter to the detector, detecting, via the detector, a third portion of light emitted from the sample, and determining one or more sample attributes based further on the detected third portion of light.

While certain examples are described herein in the context of tandem mass spectrometry, illustrative systems and methods described herein may be implemented and used for data-dependent mass spectrometry in any suitable mass spectrometry configuration, such as in any multi-stage mass spectrometer. Moreover, while certain illustrative examples are described herein in the context of precursor ions being identified and excluded from MS2 analysis, the principles described herein may be applied to any version of a product ion.

One or more of the systems and methods described herein are implemented by one or more processors executing instructions stored in memory. The instructions, when executed by the one or more processors, cause control of the programmable wavelength filter, processing of signals received from the detector, and determination of one or more attributes of an analyte based on detected light. The instructions may be stored on a non-transitory computer-readable medium.

Advantages and features of the present disclosure can be further described by the following clauses:
Clause 1. A spectroscopic system, comprising: a source for generating an electromagnetic radiation; a detector for detecting a light emitted from a sample; a programmable wavelength filter including multiple pixels for selectively directing the light emitted from the sample to the detector, wherein the multiple pixels form a plurality of pixel regions, and each pixel region is configured to direct the light of a same wavelength; a memory for storing instructions; and one or more processors communicatively coupled to the memory and configured to execute the instructions to: set the programmable wavelength filter to a first setting; irradiate the sample with the electromagnetic radiation; direct, via the programmable wavelength filter, a first portion of the light emitted from the sample to the detector, wherein at least one pixel region of the programmable wavelength filter includes a first non-zero number of pixels directing the light from the sample to the detector and a second non-zero number of pixels not directing the light from the sample to the detector; and detect, via the detector, the first portion of the light.
Clause 2. The spectroscopic system of clause 1, wherein the pixels of the programmable wavelength filter are arranged in multiple pixel columns, and each pixel region corresponds to one or more pixel columns.
Clause 3. The system of any of the preceding clauses, wherein at a particular wavelength corresponding to the at least one pixel region of the programmable wavelength filter, a non-zero fraction of the light emitted from the sample received by the programmable wavelength filter is directed to the detector.
Clause 4. The spectroscopic system of any of the preceding clauses, wherein the one or more processors are further configured to execute the instructions to: generate a linear model by fitting a plurality of spectral measurements from one or more analytes of interest to one or more attributes of the one or more analytes; and determine the first non-zero number and the second non-zero number based on the linear model.
Clause 5. The spectroscopic system of any of the preceding clauses, wherein the one or more processors are further configured to execute the instructions to: set the programmable wavelength filter to a second setting; irradiate the sample with the electromagnetic radiation; direct, via the programmable wavelength filter, a second portion of the light emitted from the sample to the detector; detect, via the detector, the second portion of the light; and determine the one or more sample attributes based on the detected first and second portions of the light.
Clause 6. The spectroscopic system of any of the preceding clauses, wherein the first setting and second setting are determined based on different signs of coefficients of the linear model.
Clause 7. The spectroscopic system of any of the preceding clauses, wherein the one or more processors are further configured to execute the instructions to: set the programmable wavelength filter to a third setting; irradiate the sample with the electromagnetic radiation; direct, via the programmable wavelength filter, all emitted light received by the programmable wavelength filter to the detector; detect, via the detector, a third portion of light emitted from the sample; and determine one or more sample attributes based further on the detected third portion of light.
Clause 8. The spectroscopic system of any of the preceding clauses, wherein the first non-zero number of pixels for directing the light emitted from the sample to the detector are selected further based on a spatial distribution of the light received by the programmable wavelength filter.
Clause 9. The spectroscopic system of any of the preceding clauses, wherein the detecting the first portion of the light includes detecting a total intensity of the first portion of the light.
Clause 10. The spectroscopic system of any of the preceding clauses, wherein the detector is a single-channel detector.
Clause 11. The spectroscopic system of any of the preceding clauses, further including one or more astigmatism optics positioned between the sample and the programmable wavelength filter for introducing astigmatism in the emitted light from the sample.
Clause 12. The spectroscopic system of any of the preceding clauses, wherein the detected first portion of the light includes a plurality of wavelengths.
Clause 13. The spectroscopic system of any of the preceding clauses, wherein the programmable wavelength filter includes a digital micromirror device.
Clause 14. The spectroscopic system of any of the preceding clauses, further including a grating positioned between the sample and the programmable wavelength filter for spreading the light emitted from the sample to different pixel regions of the programmable wavelength filter.
Clause 15. A method for spectroscopic analysis, comprising: generating electromagnetic radiation using a source; setting a programmable wavelength filter to a first setting, the programmable wavelength filter including multiple pixels forming a plurality of pixel regions, each pixel region configured to direct light of a same wavelength to a detector; irradiating a sample with the electromagnetic radiation; directing a first portion of the light emitted from the sample responsive to the irradiation to the detector via the programmable wavelength filter, wherein at least one pixel region of the programmable wavelength filter includes a first non-zero number of pixels directing the light emitted from the sample to the detector and a second non-zero number of pixels not directing the light emitted from the sample to the detector; and detecting the first portion of the light using the detector.
Clause 16. The method of clause 15, further comprising: generating a linear model by fitting a plurality of spectral measurements from one or more analytes of interest to one or more attributes of the one or more analytes; and determining the first setting of the programmable wavelength filter based on the linear model.
Clause 17. The method of any of clauses 15 or 16, further comprising determining the first non-zero number and the second non-zero number based on the linear model.
Clause 18. The method of any of clauses 15-17, further comprising determining the first non-zero number and the second non-zero number based on coefficients of the linear model which have the same sign.
Clause 19. The method of any of clauses 15-18, further comprising: adjusting an astigmatism of the light emitted from the sample; and determining the first setting based on the linear model and a distribution of the adjusted light on the programmable wavelength filter.
Clause 20. The method of any of clauses 15-19, wherein the spectral measurements from one or more analytes of interest includes a plurality of the spectra from the one or more analytes of interest.
Clause 21. A spectrometer system comprising a programmable wavelength filter configured to selectively direct light to a detector, the programmable wavelength filter comprising multiple pixels that form a plurality of pixel regions, and each pixel region is configured to direct the light of a same wavelength, wherein at least one pixel region of the programmable wavelength filter includes a first non-zero number of pixels directing the light from the sample to the detector and a second non-zero number of pixels not directing the light from the sample to the detector.

## Claims

1. A spectroscopic system, comprising:
a source for generating an electromagnetic radiation;
a detector for detecting a light emitted from a sample;
a programmable wavelength filter including multiple pixels for selectively directing the light emitted from the sample to the detector, wherein the multiple pixels form a plurality of pixel regions, and each pixel region is configured to direct the light of a same wavelength;
a memory for storing instructions; and
one or more processors communicatively coupled to the memory and configured to execute the instructions to:
set the programmable wavelength filter to a first setting;
irradiate the sample with the electromagnetic radiation;
direct, via the programmable wavelength filter, a first portion of the light emitted from the sample to the detector, wherein at least one pixel region of the programmable wavelength filter includes a first non-zero number of pixels directing the light from the sample to the detector and a second non-zero number of pixels not directing the light from the sample to the detector; and
detect, via the detector, the first portion of the light.

2. The spectroscopic system of claim 1, wherein the pixels of the programmable wavelength filter are arranged in multiple pixel columns, and each pixel region corresponds to one or more pixel columns.

3. The system of claim 1, wherein at a particular wavelength corresponding to the at least one pixel region of the programmable wavelength filter, a non-zero fraction of the light emitted from the sample received by the programmable wavelength filter is directed to the detector.

4. The spectroscopic system of claim 1, wherein the one or more processors are further configured to execute the instructions to:
generate a linear model by fitting a plurality of spectral measurements from one or more analytes of interest to one or more attributes of the one or more analytes; and
determine the first non-zero number and the second non-zero number based on the linear model.

5. The spectroscopic system of claim 4, wherein the one or more processors are further configured to execute the instructions to:
set the programmable wavelength filter to a second setting;
irradiate the sample with the electromagnetic radiation;
direct, via the programmable wavelength filter, a second portion of the light emitted from the sample to the detector;
detect, via the detector, the second portion of the light; and
determine one or more sample attributes based on the detected first and second portions of the light.

6. The spectroscopic system of claim 5, wherein the first setting and second setting are determined based on different signs of coefficients of the linear model.

7. The spectroscopic system of claim 6, wherein the one or more processors are further configured to execute the instructions to:
set the programmable wavelength filter to a third setting;
irradiate the sample with the electromagnetic radiation;
direct, via the programmable wavelength filter, all emitted light received by the programmable wavelength filter to the detector;
detect, via the detector, a third portion of light emitted from the sample; and
determine one or more sample attributes based further on the detected third portion of light.

8. The spectroscopic system of claim 4, wherein the first non-zero number of pixels for directing the light emitted from the sample to the detector are selected further based on a spatial distribution of the light received by the programmable wavelength filter.

9. The spectroscopic system of claim 1, wherein detect the first portion of the light includes detect a total intensity of the first portion of the light.

10. The spectroscopic system of claim 1, wherein the detector is a single-channel detector.

11. The spectroscopic system of any of previous claims, further including one or more astigmatism optics positioned between the sample and the programmable wavelength filter for introducing astigmatism in the light emitted from the sample.

12. The spectroscopic system of any of previous claims, wherein the first portion of the light includes a plurality of wavelengths.

13. The spectroscopic system of any of previous claims, wherein the programmable wavelength filter includes a digital micromirror device.

14. The spectroscopic system of any of previous claims, further including a grating positioned between the sample and the programmable wavelength filter for spreading the light emitted from the sample to different pixel regions of the programmable wavelength filter.

15. A method for spectroscopic analysis, comprising:
generating electromagnetic radiation using a source;
setting a programmable wavelength filter to a first setting, the programmable wavelength filter including multiple pixels forming a plurality of pixel regions, each pixel region configured to direct light of a same wavelength to a detector;
irradiating a sample with the electromagnetic radiation;
directing a first portion of the light emitted from the sample responsive to the irradiation to the detector via the programmable wavelength filter, wherein at least one pixel region of the programmable wavelength filter includes a first non-zero number of pixels directing the light emitted from the sample to the detector and a second non-zero number of pixels not directing the light emitted from the sample to the detector; and detecting the first portion of the light using the detector.
